# EUROPEAN PATENT SPECIFICATION

(11) **EP 3 288 050 B1**
(45) Date of publication and mention of the grant of the patent: **10.11.2021**
(21) Application number: 15889520.1
(22) Date of filing: 23.04.2015
(51) Int. Cl.: H01H 31/00, H01H 31/28, H01H 1/22, H01H 1/50

(54) **POTENTIAL TRANSFORMER ISOLATING DEVICE AND GAS-INSULATED SWITCHGEAR**
SPANNUNGSWANDLERISOLIERUNGSVORRICHTUNG UND GASISOLIERTE SCHALTANLAGE
DISPOSITIF D'ISOLATION DE TRANSFORMATEUR DE TENSION ET APPAREILLAGE DE COMMUTATION À ISOLATION GAZEUSE

(43) Date of publication of application: 28.02.2018
(73) Proprietor: ABB Schweiz AG, 5400 Baden (CH)
(72) Inventor: ZENG, Lusha, Xiamen, Fujian 361005 (CN); QUE, Yinzhong, Xiamen, Fujian 361009 (CN)
(74) Representative: Zimmermann & Partner Patentanwälte mbB
(86) International application number: PCT/CN2015/077310
(87) International publication number: WO 2016/169031

(56) References cited:
- EP-A1- 0 755 061
- WO-A1-2016/012444
- CN-A- 102 339 669
- CN-A- 103 971 982
- CN-U- 204 230 137
- CN-Y- 200 962 373
- DE-A1- 19 511 736
- DE-B3-102010 061 368

## Description

### FIELD

The present invention belongs to the technical field of power products, and more particularly, to a potential transformer isolating device for use on a gas-insulated switchgear and a control device, the gas-insulated switchgear and the control device using dry air as the insulating medium.

### BACKGROUND

At present, the common potential transformer isolating device of the medium and high voltage gas-insulated switchgear and control device adopts the isolation blade arm in the form of a metal sheet wound with a spring at the end and designed with a U-shaped structure at high and low voltage position. When the potential transformer is conducted or grounded, the blade arm swings to clip the end spring into the U-shaped structure. This structure can be successfully used for the medium-voltage gas switchgear and control device that take sulfur hexafluoride as the insulation medium.

However, it requires optimizing the electric field here for the medium and high voltage gas-insulated switchgear and control device that adopt the dry air as the insulation medium, to satisfy the insulation requirements. The electric field intensity of the current isolation blade arm is unsatisfactory and the U-shaped structure in the device is unfavorable for the insulation distance.

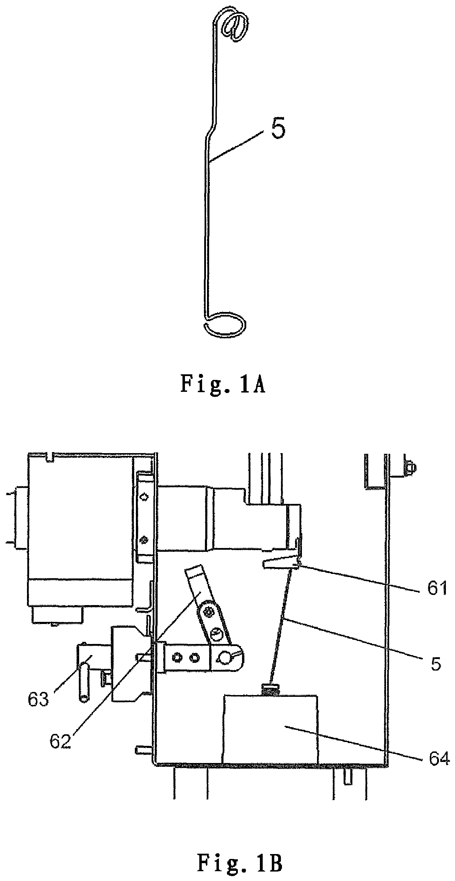

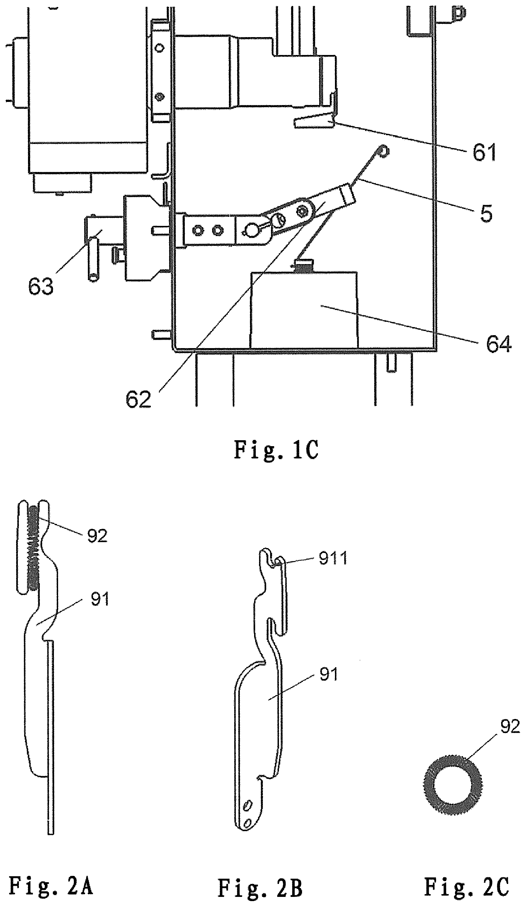

Figs. 1A, 1B and 1C are schematic diagrams of the current potential transformer isolating device and the structure schematic diagrams of the potential transformer isolating device mounted on the gas-insulated switchgear and control device. A wire spring 5 is mounted on the potential transformer 64 via a nut; when a shifting fork 62 does not act on the wire spring 5, the action of spring force of the wire spring 5 causes the potential transformer 64 in an ON-state as shown in Fig. 1B.

When a drive device 63 drives the shifting fork 62, the shifting fork 62 acts on the wire spring 5, which causes the potential transformer 64 in an isolation state but not grounded as shown in Fig. 1C.

When the above current potential transformer isolating device is used for the gas-insulated switchgear and control device that adopt the dry air as the insulation medium, when the potential transformer 64 is in the isolation state, a high-voltage connecting plate 61 is not distal enough from the wire spring 5; meanwhile, a wire diameter of the wire spring 5 is small and the field intensity is strong, so it is extremely disadvantageous for insulation. Moreover, because the potential transformer 64 is not grounded during the isolation state, it will pose safety threats to the maintenance personnel to a certain extent.

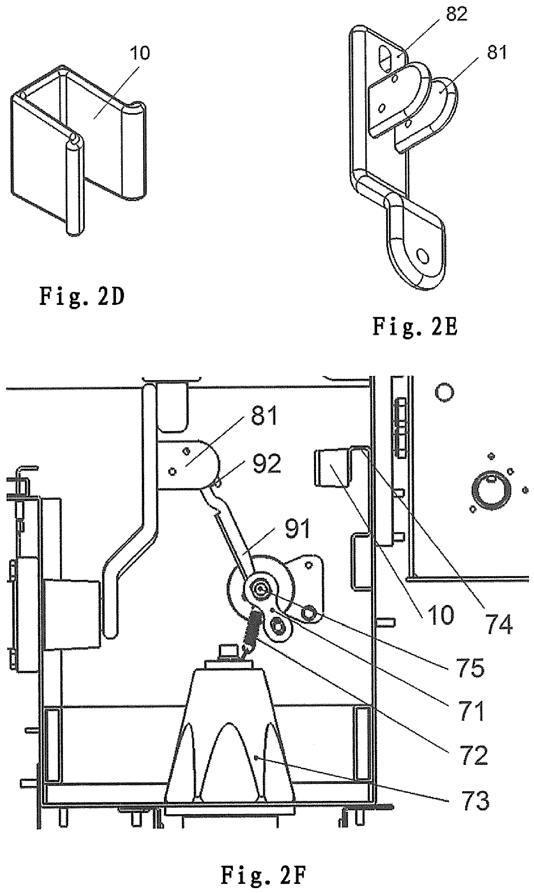

Figs. 2A-2G are schematic diagrams of a further current potential transformer isolating device and the structural schematic diagrams of the potential transformer isolating device mounted on the gas-insulated switchgear and control device; wherein Fig. 2A is a schematic diagram of connection between the swinging rod and the spring, Fig. 2B is a perspective view of the swinging rod and Fig. 2C is a perspective view of the spring. As shown, the spring 92 is clipped in a fitting slot 911 of the swinging rod 91, and the swinging rod 91 is mounted on a spindle 75 via a nut. The swinging rod 91 is connected to a potential transformer socket 73 through the spring 72 to implement the connection between the swinging rod 91 and the potential transformer. Fig. 2D is a perspective view of a grounded U-shaped plate and Fig. 2E is a structural schematic diagram of a U-shaped structure consisting of a copper block and a copper bar. The grounded U-shaped plate 10 is connected to a housing 74 through a bolt link. The copper block 81 is mounted on the copper bar 82 to form the U-shaped structure. A drive plate 71 is secured on the spindle 75; when an external device drives the drive plate 71, it drives the spindle 75 to rotate and rotates the swinging rod 91 at the same time.

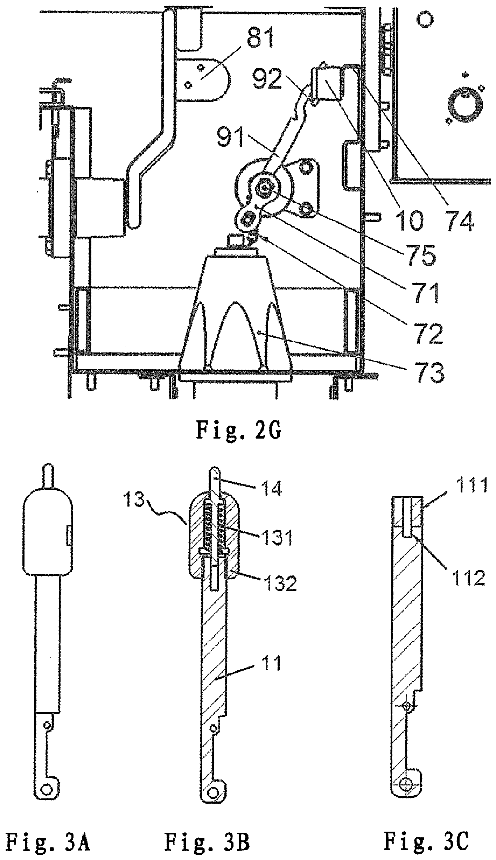

When the swinging rod 91 rotates, the spring 92 is clipped in the U-shaped structure consisting of the copper block 81 and the copper bar 82. At this moment, the potential transformer is in an ON-state as shown in Fig. 2F. When the swinging rod 91 rotates to clip the spring 92 into the grounded U-shaped plate 10, the potential transformer is in an isolation state at this time and is reliably grounded simultaneously. Therefore, the potential transformer is in an isolation state as shown in Fig. 2G.

The above current potential transformer isolating device, due to the employment of the U-shaped structure at both the high voltage end and the low voltage end, causes reduction of air space between the high and low voltage. Besides, since the spring 92 is clipped in the fitting slot 911 of the swinging rod 91 upon being deformed, if the swinging rod is displaced from the center of the U-shaped structure, the spring 92 can easily fall off at this time, which cannot guarantee conduction or grounding of the potential transformer.

Therefore, a potential transformer isolating device with optimized electric field and better insulation distance is in need.

WO 2016/012444 A1 describes a clip for connecting a low-current device to a gas insulated substation allowing said device to be disconnected for an operational test phase of the substation.

DE 10 2010 061368 B3 describes a switching device. CN 204 230 137 U and DE 195 11 736 A1 disclose examples of switching devices having a grounding function.

### SUMMARY

Regarding the defects of the potential transformer isolating device in the prior art, one aspect of the present invention provides a potential transformer isolating device according to claim 1.

According to an optimal embodiment of the present invention, the compression device comprises a compression spring and an internally threaded nut having internal threads at an end of the inner surface and; the swinging rod has external threads at an end and a guide hole therein; the compression spring is mounted on a guide-pole guide end of the guide pole, the guide-pole guide end being mounted in the guide hole; the guide-pole connecting end passes through the guide-pole outlet hole on the internally threaded nut and then the internally threaded nut fits with external threads on the swinging rod to form assembling connection.

According to the optimal embodiment of the present invention, the guide pole further has a guide-pole catch, which is positioned between the guide-pole guide end and the guide-pole connecting end; a diameter of the guide-pole catch is greater than a diameter of the guide-pole connecting end and an outer diameter of the compression spring.

According to the optimal embodiment of the present invention, a guide-pole guide hole is provided in the internal treaded nut which is suitable for movement of the guide-pole catch within the guide-pole guide hole, and a guide-pole outlet hole is provided at the ends of the internal treaded nut. The dimension of the guide-pole outlet hole is adapted to protruding of the guide-pole connecting end, and the guide-pole catch cannot reach out.

According to a further optimal embodiment of the present invention, the arc-shaped guide-pole connecting end of the guide pole is an internally threaded nut; the guide-pole guide end of the guide pole has external threads matched with internal threads of the internally threaded nut at one end; the internally threaded nut is connected to the guide-pole guide end to form one piece via threads.

According to the optimal embodiment of the present invention, the internally threaded nut comprises an arc-shaped nut end and a nut catch.

The compression device comprises a compression spring and a lower compression clip and an upper compression clip positioned on the swinging rod; the internally threaded nut includes a nut catch at the bottom; the compression spring is mounted on the guide-pole guide end of the guide pole and between the lower compression clip and the nut catch.

A diameter of the nut catch is greater than a diameter of the arc-shaped nut end and an outer diameter of the compression spring.

According to the optimal embodiment of the present invention, the lower compression clip is provided with a guide-pole guide hole thereon and the upper compression clip is provided with a guide-pole outlet hole thereon; the guide-pole guide hole is suitable for movement of the guide-pole guide end within the guide-pole guide hole while the compression spring cannot pass through; the guide-pole outlet hole is adapted to protruding of the arc-shaped nut end while the nut catch cannot reach out.

According to the optimal embodiment of the present invention, the swinging rod is an aluminum alloy swinging rod. The guide pole is an aluminum alloy guide rod. The compression spring is a stainless steel spring.

Another aspect of the present invention provides a gas-insulated switchgear, comprising a potential transformer; it further comprises a metallic shielding block, an extension spring and the potential transformer isolating device according to any of the above contents; the potential transformer isolating device is connected to the potential transformer via the metallic shielding block and the extension spring; the extension spring is connected to the metallic shielding block at one end and to the potential transformer isolating device at the other end; the metallic shielding block is mounted on the potential transformer via a bolt.

According to the optimal embodiment of the present invention, the extension spring is used for causing the potential transformer isolating device to connect the potential transformer to a primary loop high-voltage end so as to cause the potential transformer to be in an ON-state, when a shifting fork does not act on the potential transformer isolating device.

When a drive device drives the shifting fork to act on the potential transformer isolating device, the potential transformer isolating device contacts a housing, implementing a function of insulating and grounding.

The potential transformer isolating device of the present invention applies the design of a retractable round stick. When the isolating device contacts the housing, it can automatically adjust the length to achieve a good contact with the housing.

### BRIEF DESCRIPTION OF THE DRAWINGS

Figs. 1A-1C are schematic diagrams of the current potential transformer isolating device and the structrual schematic diagrams of the current potential transformer isolating device mounted on the gas-insulated switchgear and control device; wherein Fig. 1A is a perspective view of the wire spring, Fig. 1B is the potential transformer in the ON-state, and Fig. 1C is the potential transformer in the isolation state.
Figs. 2A-2G are schematic diagrams of another current potential transformer isolating device and the structrual schematic diagrams of the potential transformer isolating device mounted on the gas-insulated switchgear and control device; wherein Fig. 2A is a schematic diagram of connection between the swinging rod and the spring, Fig. 2B is a perspective view of the swinging rod, Fig. 2C is a perspective view of the spring, Fig. 2D is a perspective view of a grounded U-shaped plate, Fig. 2E is a structrual schematic diagram of a U-shaped structure consisting of a copper block and a copper bar, Fig. 2F is the potential transformer in the ON-state, and Fig. 2G is the potential transformer in the isolation state.

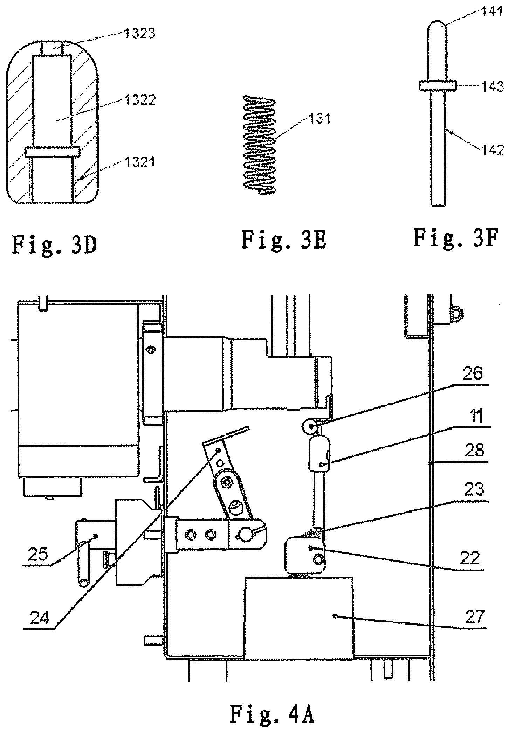

Figs. 3A-3F are schematic diagrams of the first optimal embodiment of the potential transformer isolating device on the gas-insulated switchgear and control device of the present invention; wherein Fig. 3A is a perspective view, Fig. 3B is a section view, Fig. 3C is a section view of the swinging rod, and Figs. 3D-3F are structural exploded views of the compression device; wherein Fig. 3D is a section view of the internally threaded nut, Fig. 3E is a perspective view of a compression spring and Fig. 3F is a perspective schematic diagram of the guide pole.

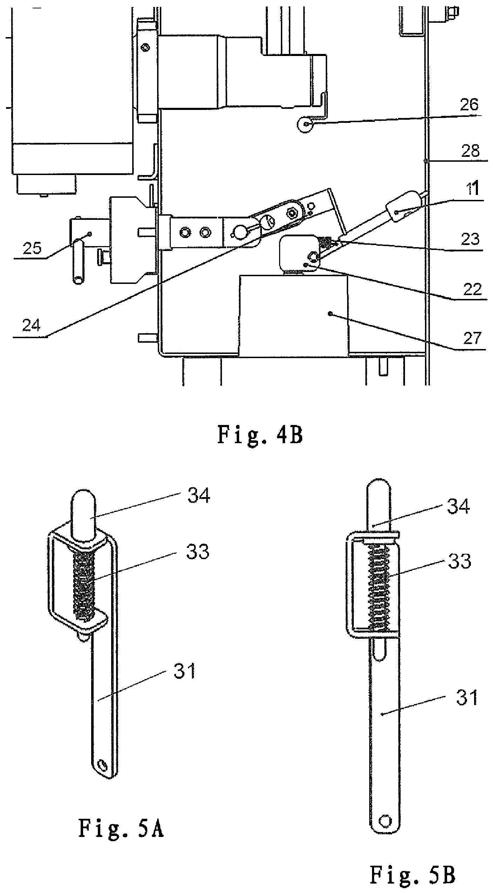

Figs. 4A and 4B demonstrate the first optimal embodiment of the potential transformer isolating device of the present invention, and local structrual schematic diagrams of the potential transformer mounted on the gas-insulated switchgear and the control device; wherein Fig. 4A is the potential transformer in the ON-state, and Fig. 4B is the potential transformer in the isolation and grounding state.

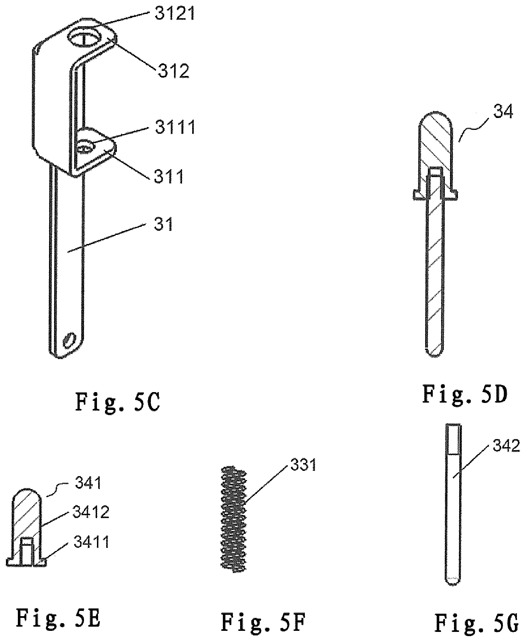

Figs. 5A-5G are schematic diagrams of a further optimal embodiment of the potential transformer isolating device on the gas-insulated switchgear and the control device of the present invention; wherein Fig. 5A is a perspective view, Fig. 5B is a front view, Fig. 5C is a perspective view of the swinging rod; Fig. 5D is a structrual diagram of the guide pole, Fig. 5E is a section view of the internally threaded nut, Fig. 5F is a perspective view of the compression spring and Fig. 5G is a perspective schematic diagram of the guide-pole guide end.

### DETAILED DESCRIPTION OF IMPLEMENTATIONS

The detailed description of the optional embodiments of the present invention will be provided below with reference to the drawings.

The present invention provides a potential transformer isolating device according to claim 1.

Figs 3A-3F are the **schematic diagrams of the first optimal embodiment** of the potential transformer isolating device on the gas-insulated switchgear and the control device of the present invention; wherein Fig. 3A is a perspective view, Fig. 3B is a section view, Fig. 3C is a section view of the swinging rod, and Figs. 3D-3F are structural exploded views of the compression device; wherein Fig. 3D is a section view of the internally threaded nut, Fig. 3E is a perspective view of the compression spring and Fig. 3F is a perspective schematic diagram of the guide pole.

According to the first optimal embodiment, the compression device 13 comprises a compression spring 131 and an internally threaded nut 132 having internal threads 1321 on an end of the inner surface; the swinging rod 11 has external threads 111 at an end and a guide hole 112 inside; the compression spring 131 is mounted on the guide-pole guide end 142 of the guide pole 42 and the guide-pole guide end 142 is mounted in the guide hole 112; the guide-pole connecting end 141 passes through a guide-pole outlet hole 1323 on the internally threaded nut and then the internally threaded nut 132 fits with the external threads 111 on the swinging rod 11 to form assembling connection.

As shown in Fig. 3F, the guide pole 14 also has a guide-pole catch 143, which is positioned between the guide-pole guide end 142 and the guide-pole connecting end 141; the diameter of the guide-pole catch 143 is greater than the diameter of the guide-pole connecting end 141 and the outer diameter of the compression spring 131.

As shown in Figs. 3B and 3D, the internal treaded nut 132 comprises a guide-pole guide hole 1322 inside and a guide-pole outlet hole 1323 at the end, the guide-pole guide hole 1322 being suitable for movement of the guide-pole catch 143 in the guide-pole guide hole; the dimension of the guide-pole outlet hole 1323 is adapted for protruding of the guide-pole connecting end 141, and the guide-pole catch 143 cannot reach out.

Figs. 4A and 4B demonstrate the first optimal embodiment of the potential transformer isolating device of the present invention, and local structrual schematic diagrams of the potential transformer mounted on the gas-insulated switchgear and the control device. In the gas-insulated switchgear and the control device, they comprise a potential transformer 27, a metallic shielding block 22, an extension spring 23 and the potential transformer isolating device 1 according to any of the above contents. The potential transformer isolating device 1 is connected to the potential transformer 27 via the metallic shielding block 22 and the extension spring 23, which extension spring 23 is connected to the metallic shielding block 22 at one end and to the potential transformer isolating device 1 at the other end; the metallic shielding block 22 is mounted on the potential transformer 27 via bolts.

As shown in Fig. 4A, the extension spring 23 is used for causing the potential transformer isolating device 1 to connect the potential transformer 27 to a high-voltage end of a primary loop to make the potential transformer 27 to be in an ON-state when a shifting fork 24 does not act on the potential transformer isolating device 1, so as to acquire a voltage value of the primary loop through the potential transformer.

As shown in Fig. 4B, when the drive device 25 drives the shifting fork 24 to act on the potential transformer isolating device 1, the potential transformer isolating device 1 contacts a housing 28. As the compression spring 131 is compressed, the guide-pole connecting end 141 can automatically adjust the length to reach a smooth connection with the housing 28, which implements reliable insulating and grounding functions and ensures safety of the maintenance personnel during service.

Figs. 5A-5G represent **schematic diagrams of a further optimal embodiment** of the potential transformer isolating device on the gas-insulated switchgear and the control device; wherein Fig. 5A is a perspective view, Fig. 5B is a front view, and Fig. 5C is a perspective view of the swinging rod; Fig. 5D is a structrual diagram of the guide pole, Fig. 5E is a section view of the internally threaded nut, Fig. 5F is a perspective view of the compression spring and Fig. 5G is a perspective schematic diagram of the guide-pole guide end.

As shown, the guide pole 34 is comprised of an internally threaded nut 341 and a guide-pole guide end 342; one end of the guide-pole guide end 342 is provided with external threads matched with internal threads of the internally threaded nut 341; the internally threaded nut 341 is connected to the guide-pole guide end 342 via threads to form one piece.

As shown in Fig. 5E, the internally threaded nut 341, according to the optimal embodiment of the present invention, comprises an arc-shaped nut end 3412 and a nut catch 3411 at the bottom; the diameter of the nut catch 3411 is greater than the diameter of the arc-shaped nut end 3412 and the outer diameter of the compression spring 331.

As shown in Figs. 5C, 5D, 5E and 5F, the compression device 33 comprises a compression spring 331 and an upper compression clip 312 and a lower compression clip 311 positioned on the swinging rod 31; the compression spring 331 is mounted on the guide-pole guide end 342 of the guide pole 34 and between the lower compression clip 311 and the nut catch 3411.

As shown in Fig. 5C, the lower compression clip 311 is provided with a guide-pole guide hole 3111 and the upper compression clip 312 is provided with a guide-pole outlet hole 3121; the guide-pole guide hole 3111 is suitable for movement of the guide-pole guide end 342 in the guide-pole guide hole and the compression spring 331 cannot pass through; the dimension of the guide-pole outlet hole 3121 is adapted for protruding of the arc-shaped nut end 3412 and the nut catch 3411 cannot reach out.

In case that the potential transformer isolating device of the second optimal embodiment of the present invention is applied into the gas-insulated switchgear and the control device, when the shifting fork does not act on the potential transformer isolating device, the potential transformer isolating device connects the potential transformer with the high-voltage end of the primary loop, causing the potential transformer to be in an ON-state, so as to acquire the voltage value of the primary loop via the potential transformer.

When the drive device drives the shifting fork to act on the potential transformer isolating device, the potential transformer isolating device contacts the housing. As the compression spring 331 is compressed, the guide-pole connecting end 341 can automatically adjust its length to reach a smooth connection with the housing.

The principle of applying the potential transformer isolating device of the second optimal embodiment of the present invention into the gas-insulated switchgear and the control device is the same as the first optimal embodiment, so it will not be illustrated in the form of drawings.

According to the above and other optimal embodiments of the present invention, the swinging rod 11, 31 of the potential transformer isolating device is aluminum alloy swinging rod and the guide pole 14, 34 is an aluminum alloy guide pole; the compression spring 131, 331 is stainless steel spring. The characteristics of the aluminum alloy materials are cheap price and light weight. According to other embodiments of the present invention, other electrically conductive materials may also be selected for the guide pole 14, 34 and the swing rod 11, 31, such as copper or common steel.

### Advantages of the potential transformer isolating device of the present invention:

The potential transformer isolating device of the present invention adopts the design of the retractable round stick. When the isolating device contacts the housing, the length of the isolating device can be automatically adjusted to achieve a good contact with the housing. Meanwhile, the electric field intensity here is superior to the current blade arm and the U-shaped structure in the current device is removed, thus increasing the insulation distance. Therefore, the present invention can effectively improve the insulation level of the medium-voltage gas-insulated switchgear and the control device and implement reliable grounding functions.

The optimal embodiments of the present invention provide application of the potential transformer isolating device of the present invention in the gas-insulated switchgear and the control device and explain the working principles. The potential transformer isolating device of the present invention can also be applied into the devices of other electric fields.

The present invention should be subject to the scope defined by the attached claims, rather than being restricted to the contents disclosed by the preferred embodiments and drawings.

## Claims

1. A potential transformer isolating device, comprising a swinging rod (11, 31) and a guide pole (14, 34), wherein the isolating device is capable of connecting the potential transformer to a primary loop high-voltage end and the isolating device is capable of contacting the housing (28) of the transformer, and the potential transformer isolating device further comprises a compression device (13, 33); the guide pole (14, 34) has a guide-pole guide end (142, 342) and an arc-shaped guide-pole connecting end (141, 341); when the guide-pole connecting end (141, 341) is under the action of an external force, the guide pole moves along a direction of the swinging rod (11, 31) and compresses the compression device (13, 33); when the external force is removed, the guide pole (14, 34) is reset under an acting force of the compression device (13, 33); the guide-pole connecting end further being configured to reach a smooth connection with the housing (28) of the transformer for implementing reliable insulating and grounding functions.

2. The potential transformer isolating device of claim 1, **characterized in that**: the compression device (13) comprises a compression spring (131) and an internally threaded nut (132), the internally threaded nut (132) having internal threads (1321) at an end of the inner surface and having a guide-pole outlet hole (1323) at an end; the swinging rod (11) has external threads (111) at an end and a guide hole (112) therein; the compression spring (131) is mounted on a guide-pole guide end (142) of the guide pole (14), the guide-pole guide end (142) being mounted within the guide hole (112); the arc-shaped guide-pole connecting end (141) passes through the guide-pole outlet hole (1323) on the internally threaded nut (132) and then the internally threaded nut (132) fits with external threads (111) on the swinging rod (11) to form assembling connection.

3. The potential transformer isolating device of claim 2, **characterized in that**: the guide pole (14) further has a guide-pole catch (143) which is positioned between the guide-pole guide end (142) and the guide-pole connecting end (141); a diameter of the guide-pole catch (143) is greater than a diameter of the guide-pole connecting end (141) and an outer diameter of the compression spring (131).

4. The potential transformer isolating device of claim 3, **characterized in that**: the internally threaded nut (132) comprises a guide-pole guide hole (1322) which is suitable for movement of the guide-pole catch (143) in the guide-pole guide hole; the dimension of the guide-pole outlet hole (1323) is adapted for protruding of the guide-pole connecting end (141), and the guide-pole catch (143) cannot reach out.

5. The potential transformer isolating device of claim 1, **characterized in that**: the arc-shaped guide-pole connecting end of the guide pole (34) is an internally threaded nut (341); the guide-pole guide end (342) of the guide pole (34) has external threads matched with the internal threads of the internally threaded nut (341) at one end; the internally threaded nut (341) is connected to the guide-pole guide end (342) via threads to form one piece.

6. The potential transformer isolating device of claim 5, **characterized in that**: the internally threaded nut (341) comprises an arc-shaped nut end (3412) and a nut catch (3411).

7. The potential transformer isolating device of claim 6, **characterized in that**: the compression device (33) comprises a compression spring (331) and a lower compression clip (311) and an upper compression clip (312) positioned on the swinging rod (31); the internally threaded nut (341) includes a nut catch (3411) at the bottom; the compression spring (331) is mounted on the guide-pole guide end (342) of the guide pole (34) and between the lower compression clip (311) and the nut catch (3411).

8. The potential transformer isolating device of claim 7, **characterized in that**: a diameter of the nut catch (3411) is greater than a diameter of the arc-shaped nut end (3412) and an outer diameter of the compression spring (331).

9. The potential transformer isolating device of any of claims 6-7, **characterized in that**: the lower compression clip (311) is provided with a guide-pole guide hole (3111) and the upper compression clip (312) is provided with a guide-pole outlet hole (3121); the guide-pole guide hole (3111) is suitable for movement of the guide-pole guide end (342) in the guide-pole guide hole and the compression spring (331) cannot pass through; the guide-pole outlet hole (3121) is adapted for protruding of the arc-shaped nut end (3412) and the nut catch (3411) cannot reach out.

10. The potential transformer isolating device of any of claims 1-8, **characterized in that**: the swinging rod (11, 31) is an aluminum alloy swinging rod.

11. The potential transformer isolating device of any of claims 1-8, **characterized in that**: the guide pole (14, 34) is an aluminum alloy guide rod.

12. The potential transformer isolating device of any of claims 1-8, **characterized in that**: the compression spring (131, 331) is a stainless steel spring.

13. A gas-insulated switchgear, comprising a potential transformer (27), **characterized in that**: it further comprises a metallic shielding block (22), an extension spring (23) and the potential transformer isolating device (1) according to any of claims 1-12; the potential transformer isolating device (1) is connected to the potential transformer (27) via the metallic shielding block (22) and the extension spring (23); the extension spring (23) is connected to the metallic shielding block (22) at one end and to the potential transformer isolating device (1) at the other end; the metallic shielding block (22) is mounted on the potential transformer (27).

14. The gas-insulated switchgear of claim 13, **characterized in that**: the extension spring (23) is used for causing the potential transformer isolating device (1) to connect the potential transformer (27) to a high-voltage end of a primary loop to make the potential transformer (27) to be in an ON-state when a shifting fork (24) does not act on the potential transformer isolating device (1) .

15. The gas-insulated switchgear of claim 13 or 14, **characterized in that**: when a drive device (25) drives the shifting fork (24) to act on the potential transformer isolating device (1), the potential transformer isolating device (1) contacts a housing (28), implementing insulating and grounding functions.

## Patentansprüche

1. Spannungstransformatorisolierungsvorrichtung, umfassend einen Schwenkstab (11, 31) und eine Führungsstange (14, 34), wobei die Isolierungsvorrichtung den Spannungstransformator mit einem Primärkreishochspannungsende verbinden kann und die Isolierungsvorrichtung das Gehäuse (28) des Transformators kontaktieren kann, und die Spannungstransformatorisolierungsvorrichtung ferner eine Druckvorrichtung (13, 33) umfasst; die Führungsstange (14, 34) ein Führungsstangenführungsende (142, 342) und ein bogenförmiges Führungsstangenverbindungsende (141, 341) aufweist; sich die Führungsstange, wenn auf das Führungsstangenverbindungsende (141, 341) eine externe Kraft einwirkt, entlang einer Richtung des Schwenkstabs (11, 31) bewegt und die Druckvorrichtung (13, 33) komprimiert; die Führungsstange (14, 34), wenn die externe Kraft entfernt wird, wieder mit einer Wirkungskraft der Druckvorrichtung (13, 33) beaufschlagt wird; wobei das Führungsstangenverbindungsende ferner dazu ausgeführt ist, eine gleichmäßige Verbindung mit dem Gehäuse (28) des Transformators zu erreichen, um zuverlässige Isolierungs- und Erdungsfunktionen zu implementieren.

2. Spannungstransformatorisolierungsvorrichtung nach Anspruch 1, **dadurch gekennzeichnet, dass**: die Druckvorrichtung (13) eine Druckfeder (131) und eine ein Innengewinde aufweisende Mutter (132) umfasst, wobei die ein Innengewinde aufweisende Mutter (132) ein Innengewinde (1321) an einem Ende der Innenfläche aufweist und ein Führungsstangenaustrittsloch (1323) an einem Ende aufweist; der Schwenkstab (11) ein Außengewinde (111) an einem Ende und ein Führungsloch (112) darin aufweist; die Druckfeder (131) an einem Führungsstangenführungsende (142) der Führungsstange (14) angebracht ist, wobei das Führungsstangenführungsende (142) in dem Führungsloch (112) angebracht ist; sich das bogenförmige Führungsstangenverbindungsende (141) durch das Führungsstangenaustrittsloch (1323) an der ein Innengewinde aufweisenden Mutter (132) erstreckt und dann die ein Innengewinde aufweisende Mutter (132) mit dem Außengewinde (111) am Schwenkstab (11) zusammenpasst, um eine Montageverbindung zu bilden.

3. Spannungstransformatorisolierungsvorrichtung nach Anspruch 2, **dadurch gekennzeichnet, dass**: die Führungsstange (14) ferner eine Führungsstangenarretierung (143) aufweist, die zwischen dem Führungsstangenführungsende (142) und dem Führungsstangenverbindungsende (141) positioniert ist; ein Durchmesser der Führungsstangenarretierung (143) größer als ein Durchmesser des Führungsstangenverbindungsendes (141) und ein Außendurchmesser der Druckfeder (131) ist.

4. Spannungstransformatorisolierungsvorrichtung nach Anspruch 3, **dadurch gekennzeichnet, dass**: die ein Innengewinde aufweisende Mutter (132) ein Führungsstangenführungsloch (1322) umfasst, das für eine Bewegung der Führungsstangenarretierung (143) in dem Führungsstangenführungsloch geeignet ist; die Abmessung des Führungsstangenaustrittslochs (1323) zum Vorragen des Führungsstangenverbindungsendes (141) ausgelegt ist und sich die Führungsstangenarretierung (143) nicht herauserstrecken kann.

5. Spannungstransformatorisolierungsvorrichtung nach Anspruch 1, **dadurch gekennzeichnet, dass**: das bogenförmige Führungsstangenverbindungsende der Führungsstange (34) eine ein Innengewinde aufweisende Mutter (341) ist; das Führungsstangenführungsende (342) der Führungsstange (34) ein Außengewinde aufweist, das mit dem Innengewinde der ein Innengewinde aufweisenden Mutter (341) an einem Ende zusammenpasst; die ein Innengewinde aufweisende Mutter (341) über ein Gewinde mit dem Führungsstangenführungsende (342) verbunden ist, um ein einziges Teil zu bilden.

6. Spannungstransformatorisolierungsvorrichtung nach Anspruch 5, **dadurch gekennzeichnet, dass**: die ein Innengewinde aufweisende Mutter (341) ein bogenförmiges Mutterende (3412) und eine Mutterarretierung (3411) umfasst.

7. Spannungstransformatorisolierungsvorrichtung nach Anspruch 6, **dadurch gekennzeichnet, dass**: die Druckvorrichtung (33) eine Druckfeder (331) und einen unteren Druckbügel (311) und einen oberen Druckbügel (312) umfasst, die an dem Schwenkstab (31) positioniert sind; die ein Innengewinde aufweisende Mutter (341) am unteren Ende eine Mutterarretierung (3411) aufweist; die Druckfeder (331) am Führungsstangenführungsende (342) der Führungsstange (34) und zwischen dem unteren Druckbügel (311) und der Mutterarretierung (3411) angebracht ist.

8. Spannungstransformatorisolierungsvorrichtung nach Anspruch 7, **dadurch gekennzeichnet, dass**: ein Durchmesser der Mutterarretierung (3411) größer als ein Durchmesser des bogenförmigen Mutterendes (3412) und ein Außendurchmesser der Druckfeder (331) ist.

9. Spannungstransformatorisolierungsvorrichtung nach einem der Ansprüche 6-7, **dadurch gekennzeichnet, dass**: der untere Druckbügel (311) mit einem Führungsstangenführungsloch (3111) versehen ist und der obere Druckbügel (312) mit einem Führungsstangenaustrittsloch (3121) versehen ist; das Führungsstangenführungsloch (3111) für eine Bewegung des Führungsstangenführungsendes (342) in dem Führungsstangenführungsloch geeignet ist und die Druckfeder (331) nicht hindurchpassieren kann; das Führungsstangenaustrittsloch (3121) zum Vorragen des bogenförmigen Mutterendes (3412) ausgelegt ist und sich die Mutterarretierung (3411) nicht herauserstrecken kann.

10. Spannungstransformatorisolierungsvorrichtung nach einem der Ansprüche 1-8, **dadurch gekennzeichnet, dass**: der Schwenkstab (11, 31) ein Aluminiumlegierungsschwenkstab ist.

11. Spannungstransformatorisolierungsvorrichtung nach einem der Ansprüche 1-8, **dadurch gekennzeichnet, dass**: die Führungsstange (14, 34) eine Aluminiumlegierungsführungsstange ist.

12. Spannungstransformatorisolierungsvorrichtung nach einem der Ansprüche 1-8, **dadurch gekennzeichnet, dass**: die Druckfeder (131, 331) eine Edelstahlfeder ist.

13. Gasisolierte Schaltanlage, umfassend einen Spannungstransformator (27), **dadurch gekennzeichnet, dass**: sie ferner einen Metallabschirmungsblock (22), eine Zugfeder (23) und die Spannungstransformatorisolierungsvorrichtung (1) nach einem der Ansprüche 1-12 umfasst; wobei die Spannungstransformatorisolierungsvorrichtung (1) über den Metallabschirmungsblock (22) und die Zugfeder (23) mit dem Spannungstransformator (27) verbunden ist; die Zugfeder (23) an einem Ende mit dem Metallabschirmungsblock (22) und am anderen Ende mit der Spannungstransformatorisolierungsvorrichtung (1) verbunden ist; der Metallabschirmungsblock (22) am Spannungstransformator (27) angebracht ist.

14. Gasisolierte Schaltanlage nach Anspruch 13, **dadurch gekennzeichnet, dass**: die Zugfeder (23) dazu verwendet wird, zu bewirken, dass die Spannungstransformatorisolierungsvorrichtung (1) den Spannungstransformator (27) mit einem Hochspannungsende eines Primärkreises verbindet, damit sich der Spannungstransformator (27) in einem EIN-Zustand befindet, wenn eine Schaltgabel (24) nicht auf die Spannungstransformatorisolierungsvorrichtung (1) einwirkt.

15. Gasisolierte Schaltanlage nach Anspruch 13 oder 14, **dadurch gekennzeichnet, dass**: wenn eine Antriebsvorrichtung (25) die Schaltgabel (24) zum Einwirken auf die Spannungstransformatorisolierungsvorrichtung (1) antreibt, die Spannungstransformatorisolierungsvorrichtung (1) ein Gehäuse (28) kontaktiert, wodurch Isolierungs- und Erdungsfunktionen implementiert werden.

## Revendications

1. Dispositif d'isolation de transformateur de tension, comprenant une tige oscillante (11, 31) et une perche de guidage (14, 34), le dispositif d'isolation pouvant connecter le transformateur de tension à une extrémité haute tension de boucle primaire et le dispositif d'isolation pouvant entrer en contact avec le boîtier (28) du transformateur, et le dispositif d'isolation de transformateur de tension comprenant en outre un dispositif de compression (13, 33) ; la perche de guidage (14, 34) ayant une extrémité de guidage de perche de guidage (142, 342) et une extrémité de connexion de perche de guidage (141, 341) en forme d'arc ; lorsque l'extrémité de liaison de perche de guidage (141, 341) est sous l'action d'une force externe, la perche de guidage se déplaçant le long d'une direction de la tige oscillante (11, 31) et comprimant le dispositif de compression (13, 33) ; lorsque la force externe est retirée, la perche de guidage (14, 34) étant réinitialisée sous une force d'action du dispositif de compression (13, 33) ; l'extrémité de connexion de perche de guidage étant en outre conçue pour atteindre une connexion sans heurt avec le boîtier (28) du transformateur pour mettre en œuvre des fonctions d'isolation et de mise à la terre fiables.

2. Dispositif d'isolation de transformateur de tension selon la revendication 1, **caractérisé en ce que** : le dispositif de compression (13) comprend un ressort de compression (131) et un écrou à filetage interne (132), l'écrou à filetage interne (132) ayant des filets internes (1321) au niveau d'une extrémité de la surface interne et ayant un trou de sortie de perche de guidage (1323) au niveau d'une extrémité ; la tige oscillante (11) a des filets externes (111) au niveau d'une extrémité et un trou de guidage (112) en son sein ; le ressort de compression (131) est monté sur une extrémité de guidage de perche de guidage (142) de la perche de guidage (14), l'extrémité de guidage de perche de guidage (142) étant montée à l'intérieur du trou de guidage (112) ; l'extrémité de connexion de perche de guidage (141) en forme d'arc passe à travers le trou de sortie de perche de guidage (1323) sur l'écrou à filetage interne (132) et ensuite l'écrou à filetage interne (132) s'adapte aux filets externes (111) sur la tige oscillante (11) pour former une connexion d'assemblage.

3. Dispositif d'isolation de transformateur de tension selon la revendication 2, **caractérisé en ce que** : la perche de guidage (14) a en outre un loquet de perche de guidage (143) qui est positionné entre l'extrémité de guidage de perche de guidage (142) et l'extrémité de connexion de perche de guidage (141) ; un diamètre du loquet de perche de guidage (143) est supérieur à un diamètre de l'extrémité de connexion de perche de guidage (141) et à un diamètre extérieur du ressort de compression (131).

4. Dispositif d'isolation de transformateur de tension selon la revendication 3, **caractérisé en ce que** : l'écrou à filetage interne (132) comprend un trou de guidage de perche de guidage (1322) qui se prête au mouvement du loquet de perche de guidage (143) dans le trou de guidage de perche de guidage ; la dimension du trou de sortie de perche de guidage (1323) est conçue pour faire saillie de l'extrémité de connexion de perche de guidage (141), et le loquet de perche de guidage (143) ne peut pas sortir.

5. Dispositif d'isolation de transformateur de tension selon la revendication 1, **caractérisé en ce que** : l'extrémité de connexion de perche de guidage en forme d'arc de la perche de guidage (34) est un écrou à filetage interne (341) ; l'extrémité de guidage de perche de guidage (342) de la perche de guidage (34) a des filets externes correspondant aux filets internes de l'écrou à filetage interne (341) à une extrémité ; l'écrou à filetage interne (341) est connecté à l'extrémité de guidage de perche de guidage (342) par l'intermédiaire des filets pour former une pièce.

6. Dispositif d'isolation de transformateur de tension selon la revendication 5, **caractérisé en ce que** : l'écrou à filetage interne (341) comprend une extrémité d'écrou en forme d'arc (3412) et un loquet d'écrou (3411).

7. Dispositif d'isolation de transformateur de tension selon la revendication 6, **caractérisé en ce que** : le dispositif de compression (33) comprend un ressort de compression (331) et une attache de compression inférieure (311) et une attache de compression supérieure (312) positionnées sur la tige oscillante (31) ; l'écrou à filetage interne (341) comprend un loquet d'écrou (3411) au fond ; le ressort de compression (331) est monté sur l'extrémité de guidage de perche de guidage (342) de la perche de guidage (34) et entre l'attache de compression inférieure (311) et le loquet d'écrou (3411).

8. Dispositif d'isolation de transformateur de tension selon la revendication 7, **caractérisé en ce que** : un diamètre du loquet d'écrou (3411) est supérieur à un diamètre de l'extrémité d'écrou en forme d'arc (3412) et à un diamètre extérieur du ressort de compression (331).

9. Dispositif d'isolation de transformateur de tension selon l'une quelconque des revendications 6 et 7, **caractérisé en ce que** : l'attache de compression inférieure (311) est pourvue d'un trou de guidage de perche de guidage (3111) et l'attache de compression supérieure (312) est pourvue d'un trou de sortie de perche de guidage (3121) ; le trou de guidage de perche de guidage (3111) se prête au mouvement de l'extrémité de guidage de perche de guidage (342) dans le trou de guidage de perche de guidage et le ressort de compression (331) ne peut pas passer à travers ; le trou de sortie de perche de guidage (3121) est conçu pour faire saillie de l'extrémité d'écrou en forme d'arc (3412) et le loquet d'écrou (3411) ne peut pas sortir.

10. Dispositif d'isolation de transformateur de tension selon l'une quelconque des revendications 1 à 8, **caractérisé en ce que** : la tige oscillante (11, 31) est une tige oscillante en alliage d'aluminium.

11. Dispositif d'isolation de transformateur de tension selon l'une quelconque des revendications 1 à 8, **caractérisé en ce que** : la perche de guidage (14, 34) est une tige de guidage en alliage d'aluminium.

12. Dispositif d'isolation de transformateur de tension selon l'une quelconque des revendications 1 à 8, **caractérisé en ce que** : le ressort de compression (131, 331) est un ressort en acier inoxydable.

13. Appareillage de commutation à isolation gazeuse, comprenant un transformateur de tension (27), **caractérisé en ce que** : il comprend en outre un bloc de blindage métallique (22), un ressort d'extension (23) et le dispositif d'isolation de transformateur de tension (1) selon l'une quelconque des revendications 1 à 12 ; le dispositif d'isolation de transformateur de tension (1) est connecté au transformateur de tension (27) par l'intermédiaire du bloc de blindage métallique (22) et du ressort d'extension (23) ; le ressort d'extension (23) est connecté au bloc de blindage métallique (22) au niveau d'une extrémité et au dispositif d'isolation de transformateur de tension (1) au niveau de l'autre extrémité ; le bloc de blindage métallique (22) est monté sur le transformateur de tension (27).

14. Appareillage de commutation à isolation gazeuse selon la revendication 13, **caractérisé en ce que** : le ressort d'extension (23) est utilisé pour amener le dispositif d'isolation de transformateur de tension (1) à connecter le transformateur de tension (27) à une extrémité haute tension d'une boucle primaire pour amener le transformateur de tension (27) dans un état sous tension lorsqu'une fourche de décalage (24) n'agit pas sur le dispositif d'isolation de transformateur de tension (1).

15. Appareillage de commutation à isolation gazeuse selon la revendication 13 ou 14, **caractérisé en ce que** : lorsqu'un dispositif d'entraînement (25) entraîne la fourche de décalage (24) à agir sur le dispositif d'isolation de transformateur de tension (1), le dispositif d'isolation de transformateur de tension (1) entre en contact avec un boîtier (28), en mettant en œuvre des fonctions d'isolation et de mise à la terre.
